# DEMANDE DE BREVET EUROPEEN

(11) **EP 1 995 914 A1**
(43) Date de publication de la demande: **26.11.2008**
(21) Numéro de dépôt: 08290471.5
(22) Date de dépôt: 20.05.2008
(51) Int. Cl.: H04L 12/28, H04L 12/56, H04L 29/06

(54) **Procédé pour sécuriser le jumelage d'un accessoire de téléphonie avec un téléphone cellulaire**

(30) Priorité: 23.05.2007 FR 0755206
(71) Demandeur: Modelabs Technologies Limited, Hong Kong (HK)
(72) Inventeur: Desormiere, Olivier, 92190 Meudon (FR); Boussemart, Franck, 45510 Tigy (FR); Ponticelli, Guillaume, Jardine's Lookout Hong Kong (CN)
(74) Mandataire: Kedinger, Jean-Paul

(57) **Abrégé**

La présente invention se rapporte à un procédé pour sécuriser le jumelage d'un accessoire de téléphonie (10), par exemple une oreillette ou un casque, fonctionnant selon une norme de télécommunication sans fil telle que la norme Bluetooth, avec un téléphone cellulaire (20) fonctionnant selon la même norme, caractérisé en ce qu'il comprend une étape d'authentification consistant à connecter l'accessoire (10) à un équipement informatique (30 ; 40) adapté pour fournir un code d'authentification assigné au téléphone cellulaire (20) concerné par le jumelage, à envoyer le code d'authentification dans une mémoire de l'accessoire (10), à faire analyser ce code par une application contenue dans ladite mémoire et, si le code est correct, à établir une communication sans fil entre l'accessoire (10) et le téléphone cellulaire (20), ou bien, dans le cas contraire, à rendre inutilisable l'accessoire (10) avec ledit téléphone cellulaire (20).

## Description

La présente invention concerne un procédé pour sécuriser le jumelage d'un accessoire portable de téléphonie avec un téléphone cellulaire.

Le jumelage entre un accessoire portable de téléphonie, tel qu'une oreillette à la norme Bluetooth, et un téléphone cellulaire, également à la norme Bluetooth, est une opération à effectuer une seule fois lorsque l'utilisateur souhaite les faire fonctionner ensemble. Le jumelage permet d'échanger entre les deux appareils des informations diverses telles que leurs possibilités réciproques en terme fonctionnel ainsi qu'une adresse unique permettant l'unicité du lien. Cette action est toujours problématique à réaliser pour les utilisateurs non initiés car ils doivent souvent naviguer dans divers menus du téléphone qui sont différentes selon le modèle et la marque. D'autre part, le jumelage nécessite d'entrer manuellement un code à quatre chiffres dans le téléphone. Ce code est, par défaut, constitué par le nombre 0000. S'il n'a pas été modifié lors de la procédure de jumelage, le code est donc connu de tous, ce qui constitue un grave inconvénient en cas de perte ou de vol de l'accessoire. En effet, ce dernier pourra être utilisé avec n'importe quel téléphone.

Un but de la présente invention est donc de résoudre le problème cité précédemment à l'aide d'une solution simple à mettre en oeuvre, fiable et peu coûteuse.

Ainsi, la présente invention a pour objet un procédé pour sécuriser le jumelage d'un accessoire de téléphonie, par exemple une oreillette ou un casque, fonctionnant selon une norme de télécommunication sans fil telle que la norme Bluetooth, avec un téléphone cellulaire fonctionnant selon la même norme, caractérisé en ce qu'il comprend une étape d'authentification consistant à connecter l'accessoire à un équipement informatique adapté pour fournir un code d'authentification assigné au téléphone cellulaire concerné par le jumelage, à envoyer le code d'authentification dans une mémoire de l'accessoire, à faire analyser ce code par une application contenue dans ladite mémoire et, si le code est correct, à établir une communication sans fil entre l'accessoire et le téléphone cellulaire, ou bien, dans le cas contraire, à rendre inutilisable l'accessoire de téléphonie avec ledit téléphone cellulaire.

Selon des modes de réalisation préférés, le procédé selon la présente invention peut comprendre en outre l'une au moins des caractéristiques suivantes :
- le code est fixe et défini en usine ;
- le code est de type tournant et calculé à l'aide d'un algorithme de cryptage ;
- l'étape d'authentification est réalisée après une opération de jumelage réalisée entre l'accessoire de téléphonie et le téléphone cellulaire, et avant ou pendant une étape dans laquelle ces deux appareils se mettent en mode veille ;
- l'étape d'authentification est réalisée simultanément et automatiquement lors de l'opération de jumelage, sans manipulation du téléphone cellulaire et/ou de l'accessoire de téléphonie ;
- l'opération de jumelage est déclenchée automatiquement lors de la connexion de l'accessoire avec l'équipement informatique ;
- la connexion entre l'accessoire de téléphonie et l'équipement informatique est réalisée à l'aide d'une liaison filaire de type USB ;
- la connexion entre l'accessoire de téléphonie et l'équipement informatique est réalisé par transmission sans fil à distance, par exemple selon une norme Bluetooth ou Wifi ; et
- l'équipement informatique est une clé USB, ou un ordinateur personnel équipé d'un logiciel d'authentification ou un ordinateur personnel relié pas l'intermédiaire du réseau Internet à un serveur sur lequel se trouve un logiciel d'authentification.

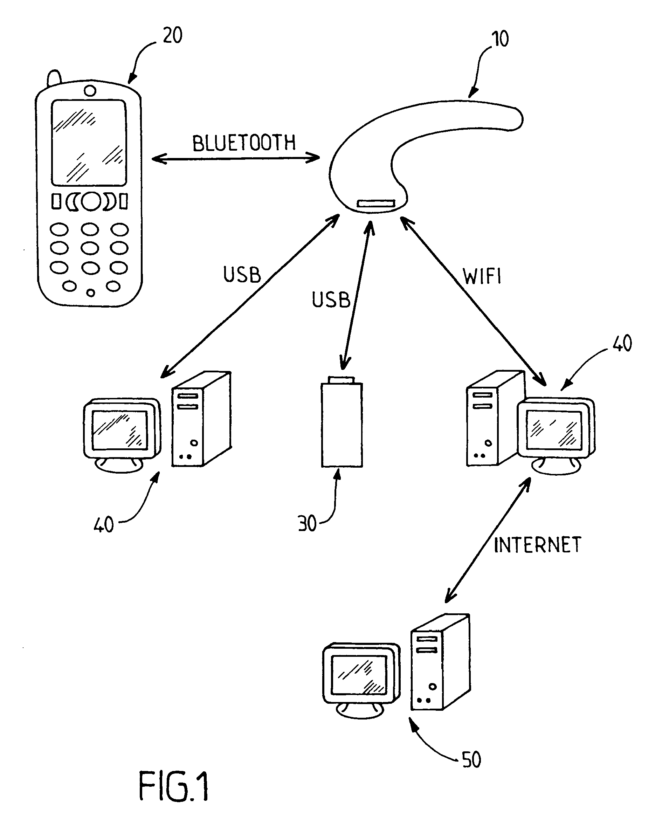

L'invention va maintenant être décrite plus en détail en référence à un des modes de réalisation particuliers donnés à titre d'exemple uniquement et représentés sur la figure 1 qui illustre un procédé pour sécuriser le jumelage entre un accessoire portable de téléphonie telle qu'une oreillette et un téléphone cellulaire.

Conformément à la présente invention, le procédé de jumelage fait ainsi intervenir une oreillette 10 fonctionnant selon une norme de télécommunication sans fil à courte portée telle que la norme Bluetooth, un téléphone cellulaire 20, fonctionnant selon la même norme, et au moins un équipement informatique adapté pour être relié à l'oreillette.

Selon un premier mode de réalisation, l'équipement informatique est une clé USB 30 pouvant être reliée à l'oreillette 10 à l'aide d'un câble USB adapté.

Selon un deuxième mode de réalisation, l'équipement informatique est un ordinateur personnel 40 pouvant être relié à l'oreillette 10 soit à l'aide d'un câble, soit par une liaison aérienne telle qu'une liaison à la norme Bluetooth ou Wifi.

Selon un troisième mode de réalisation, l'équipement informatique est constitué par un ordinateur personnel 40 relié d'une part à l'oreillette 10 comme dans l'exemple précédent et d'autre part à un serveur distant 50 via une connexion réseau, par exemple de type Internet.

Dans ces trois modes de réalisation, l'équipement informatique comporte un logiciel destiné à fournir un code d'authentification à une mémoire ménagée dans l'oreillette 10. Dans le premier cas, le logiciel est directement implanté dans la clé USB 30. Dans le second cas, le logiciel est directement implanté dans l'ordinateur personnel 40 alors que dans le troisième cas, l'ordinateur personnel 40 accède au logiciel via le serveur distant 50.

Selon la présente invention, le procédé de sécurisation de jumelage comprend une étape d'authentification consistant à réaliser les étapes suivantes :
- connecter l'oreillette 10 à l'équipement informatique 30 ou 40 de manière aérienne ou filaire pour que ce dernier fournisse le code d'authentification assigné de manière unique au téléphone cellulaire 20 concerné par le jumelage,
- envoyer le code d'authentification dans une mémoire de l'oreillette 10,
- faire analyser ce code par une application contenue dans ladite mémoire et,
- si le code est correct, établir une communication sans fil entre l'oreillette 10 et le téléphone cellulaire 20, ou bien, dans le cas contraire, rendre inutilisable l'oreillette 10 avec ledit téléphone cellulaire 20.

Bien entendu, ce code est soit fixé en usine dans le logiciel de l'équipement informatique, soit généré par un algorithme de cryptage, auquel cas il peut être de type tournant.

Ainsi, en raison de l'unicité du lien créé lors de l'authentification, si l'oreillette est volée ou perdue, il sera impossible de la faire fonctionner avec un autre téléphone cellulaire sans avoir le code fourni par l'équipement informatique et sans avoir connecté ce dernier à l'oreillette.

L'étape d'authentification décrite précédemment est réalisée après l'opération de jumelage proprement dite, et de préférence avant ou pendant une étape dans laquelle le téléphone et l'oreillette se mettent en mode veille.

La procédure de jumelage peut également être simplifiée de manière à la rendre même transparente pour l'utilisateur. Ainsi, l'étape d'authentification peut être réalisée simultanément et automatiquement lors de l'opération de jumelage, sans manipulation du téléphone cellulaire et/ou de l'oreillette. Pour cela, l'opération de jumelage est déclenchée automatiquement lors de la connexion filaire ou aérienne de l'oreillette avec l'équipement informatique. Le logiciel de l'oreillette ayant détecté cette connexion se met alors automatiquement en mode jumelage avec le téléphone cellulaire et déroule le processus de jumelage puis d'authentification jusqu'à son accomplissement final. En pratique, l'oreillette demande au téléphone, par exemple par l'intermédiaire d'un message Bluetooth, de se mettre en mode jumelage (ce que l'utilisateur ferait normalement manuellement). Le processus de jumelage est alors effectué sans avoir à passer par des menus sur le téléphone cellulaire. Cela évite à l'utilisateur de commettre des erreurs lors du jumelage. Ensuite, la procédure d'authentification se met en route et compare le code envoyé automatiquement par l'équipement informatique à l'oreillette au moment de leur connexion. Enfin, l'oreillette se met en mode veille.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, l'oreillette peut être remplacée par un casque et le téléphone cellulaire par un Smartphone ou un PDAphone.

## Revendications

1. Procédé pour sécuriser le jumelage d'un accessoire portable de téléphonie (10), constitué par une oreillette ou un casque et fonctionnant selon une norme de télécommunication sans fil telle que la norme Bluetooth, avec un téléphone cellulaire (20) fonctionnant selon la même norme, **caractérisé en ce qu'**il comprend une étape d'authentification consistant à connecter l'accessoire (10) à un équipement informatique (30 ; 40) adapté pour fournir un code d'authentification assigné au téléphone cellulaire (20) concerné par le jumelage, à envoyer le code d'authentification dans une mémoire de l'accessoire (10), à faire analyser ce code par une application contenue dans ladite mémoire et, si le code est correct, à établir une communication sans fil entre l'accessoire (10) et le téléphone cellulaire (20), ou bien, dans le cas contraire, à rendre inutilisable l'accessoire (10) avec ledit téléphone cellulaire (20).

2. Procédé selon la revendication 1, **caractérisé en ce que** le code est fixe et défini en usine.

3. Procédé selon la revendication 2, **caractérisé en ce que** le code est de type tournant et calculé à l'aide d'un algorithme de cryptage.

4. Procédé selon l'une quelconque des revendications précédentes, **caractérisé en ce que** l'étape d'authentification est réalisée après une opération de jumelage réalisée entre l'accessoire de téléphonie (10) et le téléphone cellulaire (20), et avant ou pendant une étape dans laquelle ces deux appareils se mettent en mode veille.

5. Procédé selon la revendication 4, **caractérisé en ce que** l'étape d'authentification est réalisée simultanément et automatiquement lors de l'opération de jumelage, sans manipulation du téléphone cellulaire (20) et/ou de l'accessoire de téléphonie (10).

6. Procédé selon la revendication 4 ou 5, **caractérisé en ce que** l'opération de jumelage est déclenchée automatiquement lors de la connexion de l'accessoire de téléphonie (10) avec l'équipement informatique (30 ; 40).

7. Procédé selon l'une quelconque des revendications précédentes, **caractérisé en ce que** la connexion entre l'accessoire de téléphonie (10) et l'équipement informatique (30 ; 40) est réalisée à l'aide d'une liaison filaire de type USB.

8. Procédé selon l'une quelconque des revendications 1 à 6, **caractérisé en ce que** la connexion entre l'accessoire de téléphonie (10) et l'équipement informatique (30 ; 40) est réalisé par transmission sans fil à distance, par exemple selon une norme Bluetooth ou Wifi.

9. Procédé selon la revendication 7, **caractérisé en ce que** l'équipement informatique (30) est une clé USB.

10. Procédé selon l'une quelconque des revendications 1 à 8, **caractérisé en ce que** l'équipement informatique (40) est un ordinateur personnel équipé d'un logiciel d'authentification.

11. Procédé selon l'une quelconque des revendications 1 à 8, **caractérisé en ce que** l'équipement informatique est un ordinateur personnel (40) relié pas l'intermédiaire du réseau Internet à un serveur (50) sur lequel se trouve un logiciel d'authentification.
